# EUROPEAN PATENT SPECIFICATION

(11) **EP 1 258 661 B1**
(45) Date of publication and mention of the grant of the patent: **06.09.2006**
(21) Application number: 01306279.9
(22) Date of filing: 20.07.2001
(51) Int. Cl.: F16J 15/06, F16L 47/06

(54) **Pipe-connector**
Rohrverbindung
Raccord de tuyauterie

(30) Priority: 10.05.2001 JP 2001139953
(43) Date of publication of application: 20.11.2002
(73) Proprietor: KYOWA Rubber Co., Ltd., Hirakata-shi Osaka (JP)
(72) Inventor: Iwaguchi, Yasutada, Takarazuka-shi, Hyogo (JP)
(74) Representative: Johnstone, Douglas Ian

(56) References cited:
- EP-A- 0 443 608
- EP-A- 1 041 332
- CH-A- 557 499
- GB-A- 1 477 074
- GB-A- 1 538 669
- US-A- 5 096 206

## Description

The present invention relates to a connector for connecting pipes, which are used for example to protect electric wires or cables.

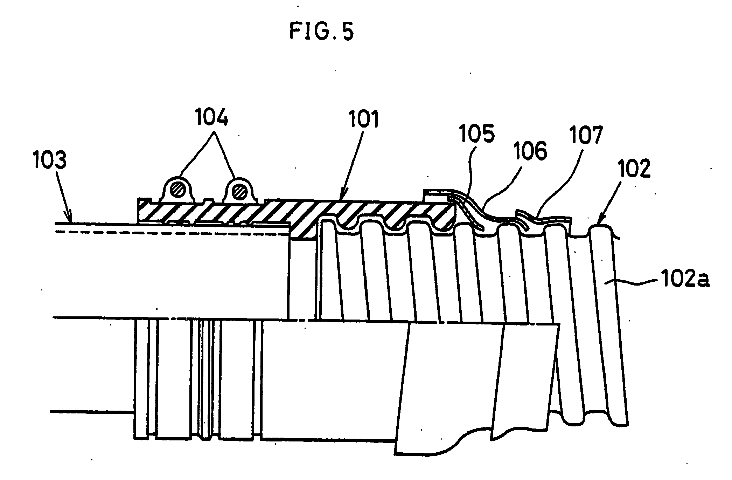

Such pipes with the necessary water-proof properties are buried underground. Figure 5 shows a typical arrangement for providing water-proofing between the pipe-connector and the pipe. Figure 5 shows a connector 101 made of synthetic rubber for connecting pipes of various types, wherein a pipe 102 provided with waves of synthetic resin and having a protruding reinforcing device 102a, in the shape of a spiral around the pipe, is screwed into one part of the pipe-connector 101. Subsequently, a pipe 103 which does not have a protruding reinforcing device around it is inserted into another part of the pipe-connector 101, which part is tightened by a band 104. Consequently, there is a requirement for sealing tape 105 to be tightly wrapped around the junction between the connector and the pipe 102 with waves, on top of which water-tight protection tape 106 is firmly wrapped. Finally, an outer end of the water-tight protection tape 106 is pressed inwards by a wrapping of vinyl tape 107. For use in exposed places the vinyl tape 107 is preferably wrapped around the entirety of the pipe-connector 101.

Therefore, between the pipe 102 with waves and the pipe-connector 101, at least three-fold water-proofing layers must be applied because of the shapes involved. This makes the connecting operation labour intensive.

The example shown in Figure 5 is a connector for connecting different pipes, wherein the above-described water-proofing structure must be applied to one end of the connector. However, in the case of a connector for forming two pipes like pipe 102, water-proofing structures must be provided at both ends, thus involving more trouble and time.

GB-A-1 477 074 discloses a plastics pipe-connector having a cylindrical main body member and an elastomeric sealing member moulded to the inside of the main body member for forming a seal with the outer surface of the pipes inserted into the connector.

US-A-5 096 206 discloses a pipe joint sealer for providing a watertight joint between pipes. The pipe joint sealer contains a foam core which moisture causes to expand and the foam core is sandwiched between two layers of fabric that permits moisture to come into contact with the foam core. In one embodiment the pipe joint sealer is used with a pipe connector having upper and lower coupling halves. The pipe joint sealer is laid in the lower coupling half and is wrapped around the joint between two coaxial pipes. The upper coupling half is then placed over the encircled joint and is bolted to the lower coupling half to compress the pipe joint sealer against the pipes and the joint. In another embodiment, the foam core of the pipe joint sealer forms a ring around the distal end of a pipe. A fabric extends a short way along both the internal and external surfaces of the pipe and over the foam core so as to affix the sealer to the end of the pipe. Another pipe has a coupling bell for receiving the distal end of the pipe. When water wets the pipe joint sealer it expands forming a watertight seal between the pipes.

EP-A-1 041 332 discloses a pipe connector made of synthetic resin having connection parts at either end which are each arranged to connect an end part of a pipe. Inside each connection part is a sealing member having a sealing flap. When an end part of a pipe is connected to the connection part the sealing flap is elastically deformed to seal the pipe to the connector.

GB-A-1 538 669 discloses a water swelling material for preventing leakage of water and which is a crosslinked mixture of a copolymer, a polymer emulsion and a compound. The water swelling material can be used in cylindrical form for connecting pipes together.

The main purpose of the present invention is to provide a pipe-connector which enables a connecting operation to be carried out very easily and wherein the water-proofing properties are very good.

According to the invention there is provided a pipe-connector made of synthetic resin or synthetic or natural rubber having a connecting part with the connector, whereby on a surface facing at least one of the pipe end parts there is formed a body,
characterised in that the body comprises an expanding body having thermoplastic resin mixed into the expanding body and which swells by absorbing water to provide air-tightness when pressed onto the relevant surfaces of the pipe parts.

The above-mentioned expanding bodies may be formed of water-swelling synthetic or natural rubber or high water-absorbing resin (water-swelling polymer), for example, comprising fibers, powders and films in the shape of a wire. In the formation of the synthetic resin or rubber, pressure and heat may be applied. Preferably the connecting part comprises flexible materials capable of increasing and decreasing in volume, which materials are suitably heat resistant. For example, sponge materials or non-woven cloth may be used containing or mixed with high water-absorbing resin or water-swelling rubber.

In order to connect the pipes using the above described pipe-connector, the end parts of the pipes only have to be screwed, pressed or inserted into the connecting part of the pipe-connector according to their shapes. Afterwards, the expanding bodies formed on the pipe facing surface of the connecting part become swollen with water from outside the connector, thus providing air-tightness, by being pressed onto the relevant surfaces of the pipe parts.

Therefore, it is not necessary to carry out complicated operations like wrapping various types of tapes therearound as has been done conventionally. Accordingly, the connecting operation is easy so that a quick connecting operation can be effected. Furthermore, when water is absorbed, the expanding body becomes expanded. It is accordingly possible to obtain effective air-tightness and water-tightness. In addition, since the expansion occurs automatically, the process is very easy and avoids the need to apply tightening forces and the like.

Furthermore, when the expanding body comprises high water-absorbing resin, once it has been expanded by water absorption, it hardens to lose water even when adding pressure. As there is water underground where the pipes are buried, air-tightness can be reliably maintained.

Due to the presence of the expanding body, there is no need to provide other parts to achieve water-proofness and the process is easy to control. The product is simple and the connection operation is easy as described above.

The thermoplastic resin is added into the expanding body, which resin can be melted by heat at the time of forming the expanding body. For example, by mixing thermoplastic resin into an expanding body made of non-woven cloth fiber in an appropriate proportion, the thermoplastic resin may be melted at the time of formation and subsequently cooled so that good homogeneity with the forming material can be achieved. Furthermore, its shape can be adjusted to any complicated form such as one having screw threads. This enables secure connection to the pipes to occur while maintaining the effect of making the expansion possible.

Sheet material may be inserted between the expanding body and material forming the connecting part. The sheet material may be ventilated or porous like clothes or may be a film, which is not porous, but may be one which becomes united with the forming material upon melting at the time of formation. During formation an adhesive agent is applied on the surface of the sheet in contact with the expanding body. This provides suitable unity with the expanding body.

When non-woven cloth is used to form the expanding body, the material is liable to penetrate the expanding body at the time of formation and also the expanding body tends to be squeezed out by pressure applied at the time of formation. The sheet material deters penetration of the material, thus providing for the suitable protection of the expanding body while serving as a buffer. Therefore, there can be obtained the effects of forming the whole material, wherein the layer structure is secured so that high water-absorbing resin of the expanding body can be swollen.

Other objects of the present invention will be apparent from the following description of preferred embodiments of the invention.

The invention will now be described by way of example only with reference to the accompanying figures in which:
FIG. 1 is a cross-sectional view of the pipe connector;
FIG. 2 is a magnified view of part A of Fig. 1;
FIG. 3 is a partial cross-sectional view of the device being used;
FIG. 4 is a cross-sectional view of an alternative embodiment of the pipe-connector; and
FIG 5 is a partial cross-sectional view of a prior art connector.

One preferred embodiment of the present invention will be explained with reference to the figures.

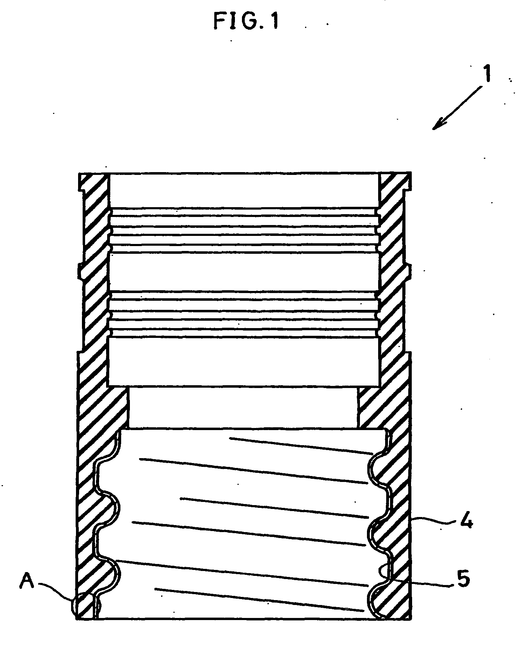

Figure 1 shows a cross-sectional view of the pipe-connector 1, wherein the pipe-connector of the present invention is used to connect a pipe 2 with waves of synthetic resin and a protruding device 2a in the shape of a spiral and a pipe 3 of the synthetic resin without a protruding device, the pipe-connector comprising rubber . The pipe-connector may be formed of synthetic rubber or natural rubber or alternatively rubber mixed with the synthetic rubber and natural rubber or synthetic resin. Furthermore, the inner surface of the connecting part 4 for connecting the pipe 2 provided with the above described waves of synthetic resin, there is formed an expanding body 5, which expands by absorbing water.

The expanding body 5 is formed of a compound of non-woven cloth, high water-absorbing resin and thermoplastic resin. This will be heated to a high temperature at the time of formation, as for the above described non-woven cloth, fibers of, for example, polyethylene terephthalate (PET) will be used because they are suitably heat-resistant. On the other hand, for the high water-absorbing resin, fibers, powders and sheets may be used in their suitable forms. As for the high water-absorbing resin, fibers may be mixed into non-woven cloth when they are used, thus providing for the expanding body to be expanded, but powders also may be mixed into the non-woven cloth fibers. When the high water-absorbing resin is used in the shape of a sheet, this may be sandwiched between non-woven cloth. The above-described thermoplastic resin may be formed of such a material as to be melted at the time of formation and the resin may be mixed therein in an appropriate proportion, for instance, as a fiber. The mixture proportion of non-woven cloth, high water-absorbing resin and thermoplastic resin is such that the ratio of, for instance, the non-woven cloth to the high water-absorbing resin may be approximately 5:5 or 5:3 and the thermoplastic resin may be sufficiently little.

For the manufacture of the pipe-connector 1, the above-describe expanding body 5 in the shape of a sheet is rolled onto the determined position of the mould (not shown in the figure), and the sheet material 6 will be additionally rolled in order to prevent the synthetic rubber as a forming material from getting into the expanding body 5 made of non-woven cloth. As for the sheet material 6 as described above, a cotton cloth may be used, wherein on one side there may be used an adhesive agent 7, for instance, rubber glue may be used, thus allowing for unity with the expanding body 5.

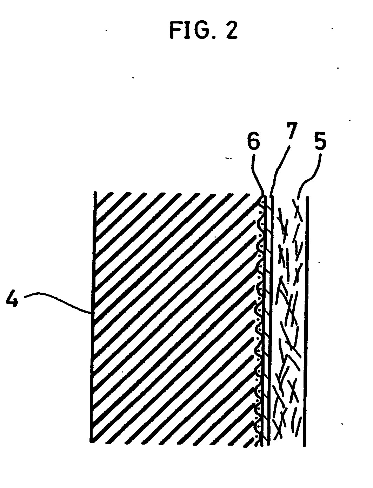

Upon the formation of the above said pipe-connector, the above-described sheet material 6 prevents the synthetic rubber from getting into the expanding body 5 made of a non-woven cloth, the sheet material serving as a buffer, as shown in the figure 2. The sheet material 6 also alleviates pressure on the expanding body 5 at the time of the formation. In addition, as the thermoplastic resin inside the expanding body 5 is melted, there is an increasing unity with the forming material, leading to stability of shape of the connector even when it includes screw threads for instance. For this reason, efficient water-proofing can be obtained, even allowing for expansion.

Alternatively, when the forming pressure can be lower the above said sheet material 6 may be omitted.

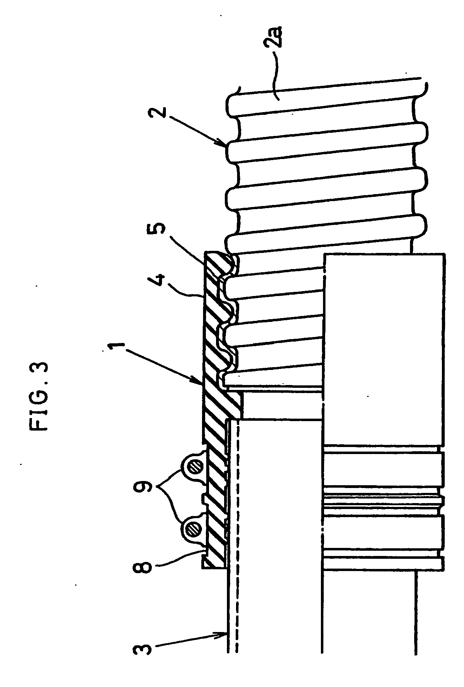

The pipe-connector 1 thus constructed may be used by inserting the pipe 2 with waves of synthetic resin into the connecting part 4. When buried under the earth, the expanding body 5 swells when exposed to ground water as shown in the Figure 3, providing a water-proofing effect. The pipe 3 of synthetic resin is inserted into the other connecting part 8. It is possible to obtain water-proofing by tightening the band 9.

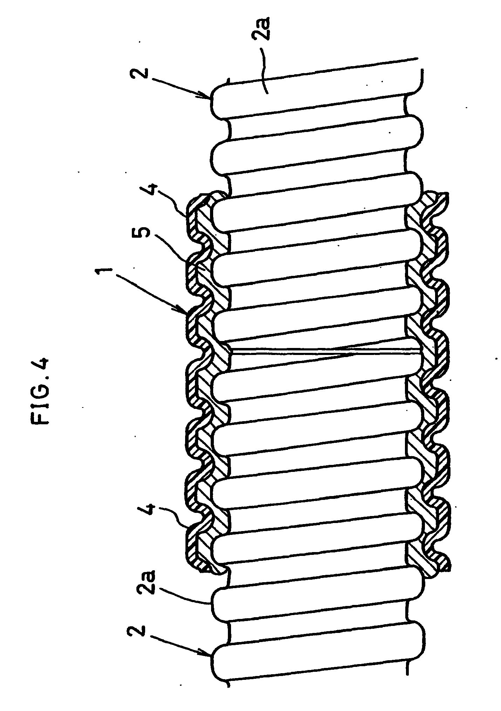

Figure 4 shows the pipe-connector 1 of synthetic resin formed in the shape of a cylinder having a protruding device in the shape of a spiral in the inner surface, in order to connect two pipes 2, 2 with waves of synthetic resin. Additionally, the expanding body 5 is formed as described above throughout the whole of the inner surface of the connecting part 4, facing the pipe 2, i.e. on both sides of the pipe-connector 1 of the present invention.

As one example of the invention, the pipe-connector 1 is formed with the expanding body 5 in the connecting part 4 for connection to a pipe 2 with waves of synthetic resin, while an expanding body 5 may also be formed in a connecting part for connection to a pipe without a protruding device. Alternatively, the pipe-connector 1 may be used not only in the way described, i.e. the pipe is inserted into its inner part but alternatively it may be so constructed that the pipe engages an outer part of the pipe connector. In this case, the outer surface of the connecting part corresponds to the facing surface of the pipe connector in the scope of the claims involving the present invention.

In this way, the connecting operation is very easy, as it suffices to merely insert the pipe into the connecting part by screwing. Additionally, as the expanding body swells it presses against the outer surface of the pipe leading automatically to efficient high water-proofing. Such water-proofing occurs without applying forces by tightening screws or binding with tape.

## Claims

1. A pipe-connector (1) made of synthetic resin or synthetic or natural rubber having a connecting part (4) for connection to end parts of pipes (2, 3) by engagement with the connector (1), whereby on a surface facing at least one of the pipe end parts (2) there is formed a body (5), **characterised in that** the body comprises an expanding body (5) having thermoplastic resin mixed into the expanding body (5) and which swells by absorbing water to provide air-tightness when pressed onto the relevant surfaces of the pipe parts (2).

2. The pipe-connector (1) according to claim 1, wherein said expanding body (5) is a non-woven cloth having a water absorbing resin.

3. The pipe-connector according to claim 1 or 2, wherein between the expanding body (5) and the connecting part (4), there is a sheet material (6) for preventing the material forming the connecting part (4) from getting into the expanding body (5).

4. The pipe-connector according to any preceding claim, wherein the expanding body (5) is situated inside the connecting part (4) so that the pipe connector (1) is adapted to receive the end parts of the pipes (2,3), thereinto.

5. The pipe-connector according to any one of claims 1 to 3, wherein the expanding body (5) is situated outside the connecting part (4) so that the pipe-connector (1) is adapted to be received inside the end parts of the pipes.

## Patentansprüche

1. Rohrverbinder (1) hergestellt aus einem synthetischen Harz oder synthetischen oder natürlichen Gummi mit einer Verbindungsteil (4) zur Verbindung von Endstücken von Rohrleitungen (2, 3) durch Zusammenfügen mit dem Rohrverbinder (1), wobei auf einer Oberfläche mindestens einem der Rohrendstücke (2) zugewandt ein Körper (5) gebildet ist, **dadurch gekennzeichnet, dass** der Körper ein ausdehnbarer Körper (5) ist, welcher thermoplastisches Harz, vermischt mit dem ausdehnbaren Körper (5) aufweist und welches bei Aufnahme von Wasser aufquillt, um eine Luft abschließende Verbindung auszubilden, wenn dieser auf die maßgeblichen Oberflächen der Rohrteile (2) gepresst wird.

2. Rohrverbinder (1) nach Anspruch 1, worin der ausdehnbare Körper (5) aus einem nicht verwebten Textil besteht, welches ein Wasser aufnehmendes Harz aufweist.

3. Rohrverbinder nach Anspruch 1 oder 2, worin zwischen dem ausdehnbaren Körper (5) und dem Verbindungsteil (4) ein blattförmiges Material (6) angeordnet ist, um zu verhindern, dass das Verbindungsteil (4) bildende Material in den ausdehnbaren Körper (5) eindringt.

4. Rohrverbinder nach einem der vorhergehenden Ansprüche, worin der ausdehnbare Körper (5) im Inneren des Verbindungsteils (4) derart angeordnet ist, dass der Rohrverbinder (1) dazu geeignet ist, die Endstücke der Rohre (2,3) darin aufzunehmen.

5. Rohrverbinder nach einem der Ansprüche 1 bis 3, worin der ausdehnbare Körper (5) außerhalb des Verbindungsteils (4) derart angeordnet ist, dass das Verbindungssteil (4) dazu geeignet ist, die Endstücke von Rohren in sich aufzunehmen.

## Revendications

1. Connecteur de tuyau (1) composé de résine synthétique ou de caoutchouc synthétique ou naturel ayant une partie de connexion (4) pour une connexion avec les parties d'extrémité de tuyaux (2, 3) par engagement avec le connecteur (1), dans lequel sur une surface faisant face au moins à une des parties d'extrémité de tuyau (2) est formé un corps (5) **caractérisé en ce que** le corps comprend un corps d'expansion (5) ayant une résine thermoplastique mélangée dans le corps d'expansion (5) et qui gonfle en absorbant de l'eau afin de produire une étanchéité à l'air lorsqu'il est pressé sur les surfaces concernées des parties de tuyau (2).

2. Connecteur de tuyau (1) selon la revendication 1, dans lequel ledit corps d'expansion (5) est un tissu non tissé ayant une résine d'absorption de l'eau.

3. Connecteur de tuyau selon la revendication 1 ou 2, dans lequel entre le corps d'expansion (5) et la partie de connexion (4), se trouve un matériau en feuille (6) afin d'éviter que le matériau formant la partie de connexion (4) ne rentre dans le corps d'expansion (5).

4. Connecteur de tuyau selon une revendication précédente quelconque, dans lequel le corps d'expansion (5) est situé à l'intérieur de la partie de connexion (4) de telle sorte que le connecteur de tuyau (1) est adapté à recevoir les parties d'extrémité des tuyaux (2, 3) en son sein.

5. Connecteur de tuyau selon l'une quelconque des revendications 1 à 3, dans lequel le corps d'expansion (5) est situé à l'extérieur de la partie de connexion (4) de telle sorte que le connecteur de tuyau (1) est adapté à être reçu à l'intérieur des parties d'extrémité des tuyaux.
